# EUROPÄISCHE PATENTSCHRIFT

(11) **EP 1 068 443 B1**
(45) Veröffentlichungstag und Bekanntmachung des Hinweises auf die Patenterteilung: **23.03.2005**
(21) Anmeldenummer: 99942718.0
(22) Anmeldetag: 30.06.1999
(51) Int. Cl.: F02M 59/46, F16K 15/04

(54) **DRUCKVENTIL**
PRESSURE VALVE
SOUPAPE DE PRESSION

(30) Priorität: 02.07.1998 DE 19829553
(43) Veröffentlichungstag der Anmeldung: 17.01.2001
(73) Patentinhaber: ROBERT BOSCH GMBH, 70442 Stuttgart (DE)
(72) Erfinder: OGATA, Kiyotaka, Saitama 355 (JP)
(86) Internationale Anmeldenummer: PCT/DE1999/001897
(87) Internationale Veröffentlichungsnummer: WO 2000/001936

(56) Entgegenhaltungen:
- EP-A- 0 142 008
- DE-A- 19 649 541
- DE-A- 19 710 891
- US-A- 4 651 779
- PATENT ABSTRACTS OF JAPAN vol. 1999, no. 04, 30 April 1999 (1999-04-30) & JP 11 002167 A (ZEXEL CORP), 6 January 1999 (1999-01-06)

## Beschreibung

Die Erfindung betrifft ein Druckventil nach der Gattung des Anspruchs 1. Ein solches Druckventil ist durch die US-A-4 651 779 bekannt. Dieses Druckventil ist zum Einbau in eine Förderleitung zwischen einer Kraftstoffeinspritzpumpe und einer Einspritzstelle an der zu versorgenden Brennkraftmaschine vorgesehen. Das Druckventil weist ein als Ventilkugel ausgebildetes bewegliches Ventilglied auf, das durch eine Rückstellfeder in Anlage an eine Ventilsitzfläche bringbar ist. Zwischen der Rückstellfeder und der Ventilkugel ist ein Federteller vorgesehen, der eine die Ventilkugel führende Kalottenfläche und eine dieser Kalottenführungsfläche abgewandte Auflagefläche für die Rückstellfeder aufweist. Die die Ventilkugel führende Kalottenfläche am Federteller ist durch Ausnehmungen unterbrochen, die zentral im Federteller angeordnet sind.

Dabei weist das bekannte Druckventil den Nachteil auf, daß beim Öffnen des als Kugelventil ausgebildeten Rückströmventils an der Kante zum Federteller ein Staudruck aufgebaut wird. In weiterer Folge bildet sich dabei zwischen der Ventilkugel und der Kalottenfläche des Federtellers ein Staupolster aus, das zwar den Federteller einen relativ großen Hub ausführen läßt, die Ventilkugel dieser Öffnungshubbewegung jedoch nahezu nicht folgt. Somit wird am Kugelventil ein zu geringer Abströmquerschnitt aufgesteuert, so daß die Durchflußmenge am Rückströmventil des bekannten Druckventils nicht ausreichend ist bzw. schwankt und das Gleichdruckventil somit fehlerhaft arbeitet. Zudem werden durch das Staudruckpolster zwischen Ventilkugel und Federteller und dessen unregelmäßiges Zusammenbrechen in Verbindung mit Schwingungen des abströmenden Kraftstoffes in der Förderleitung ein wechselndes Abheben und Aufschlagen der Ventilkugel auf die Führungsfläche des Federtellers verursacht, was einen erhöhten Verschleiß an den Kontaktflächen des Federtellers und der Ventilkugel zur Folge hat. Darüberhinaus können infolge der höheren Federbeanspruchung vermehrt Brüche an der Rückstellfeder auftreten, so daß die Zuverlässigkeit und Lebensdauer des Kugelventils innerhalb des Druckventiles erheblich eingeschränkt ist.

Durch die DE-A-19 649 541 ist außerdem ein Druckventil bekannt, mit einem als Ventilkugel ausgebildeten beweglichen Ventilglied, das durch eine Rückstellfeder in Anlage an eine Ventilsitzfläche bringbar ist. Zwischen der Rückstellfeder und der Ventilkugel ist ein Federteller vorgesehen, der eine die Ventilkugel führende Kalottenfläche und eine dieser Kalottenführungsfläche abgewandte Auflagefläche für die Rückstellfeder aufweist. Die die Ventilkugel führende Kalottenfläche ist durch Ausnehmungen an deren Rand unterbrochen. Der Federteller ist dabei als Spritzgußteil aus Kunststoff ausgebildet und die Ausnehmungen sind als Durchbrüche im Federteller ausgebildet, der nur durch schmale Stege gebildet ist. Eine Ausführung des Federtellers aus Kunststoff in dieser Form ist nur bei geringer Belastung möglich.

### Vorteile der Erfindung

Das erfindungsgemäße Druckventil mit den Merkmalen gemäß Anspruch 1 hat demgegenüber den Vorteil, dass durch die schräg verlaufenden Flächenanschliffe und die anschließenden axialen Flächenanschliffe am Federteller ein scharfer Strahlumlenkpunkt des abströmenden Kraftstoffs und somit ein Staudruckpunkt vermieden werden kann. Somit folgt die Ventilkugel während der Öffnungshubbwegung des Kugelventils ohne Einschränkungen der Ausweichbewegung des Federtellers in Öffnungshubrichtung und gibt so einen ausreichenden Öffnungsquerschnitt an der Ventilsitzfläche frei, was einen gleichmäßigen Kraftstoffströmungsquerschnitt am Kugelventil ermöglicht. Zudem kann ein Abheben des Federtellers von der Ventilkugel vermieden werden, so dass der Federteller keinen separaten größeren Hub ausführt und somit die Rückstellfeder weniger belastet wird. Desweiteren kann ein wechselndes Abheben und Aufschlagen der Ventilkugel auf den Federteller vermieden werden, was den mechanischen Verschleiß an diesen Bauteilen erheblich reduziert.

Die erfindungsgemäße Ausbildung des Federtellers des Kugelventils ist dabei beispielhaft an einem Druckventil zum Einbau in eine Förderleitung zwischen einer Kraftstoffeinspritzpumpe und einer Einspritzstelle an der zu versorgenden Brennkraftmaschine beschrieben, kann jedoch auch in sämtlichen anderen Kugelventilen, zum Beispiel einfachen Rückschlagventilen verwendet werden.

Weitere Vorteile und vorteilhafte Ausgestaltungen des Gegenstandes der Erfindung sind der Zeichnung, der Beschreibung und den Patentansprüchen entnehmbar.

### Zeichnung

Ein Ausführungsbeispiel des erfindungsgemäßen Druckventils ist in der Zeichnung dargestellt und wird in der nachfolgenden Beschreibung näher erläutert.

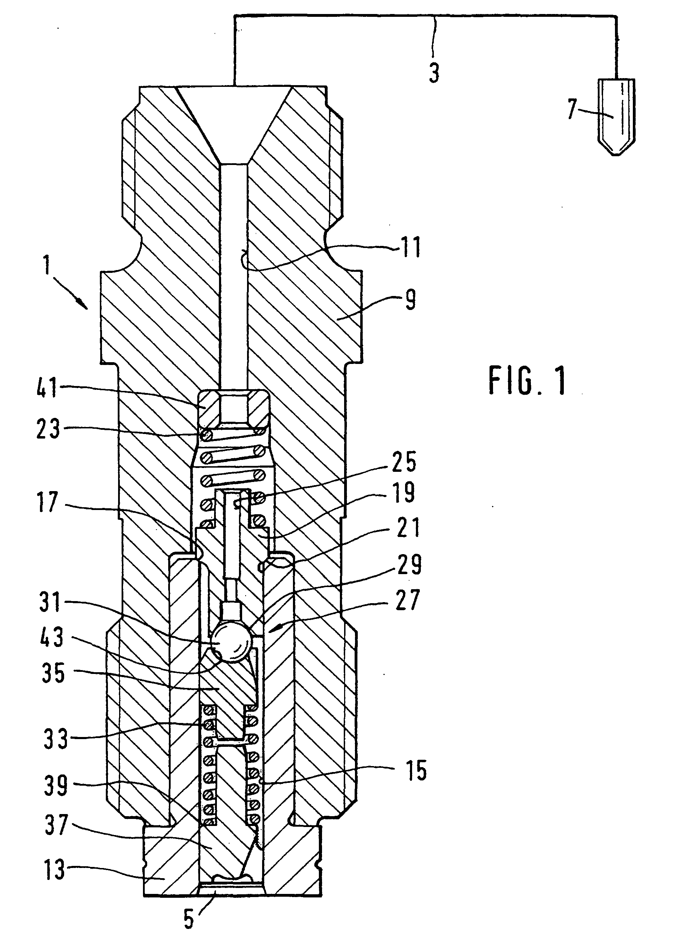

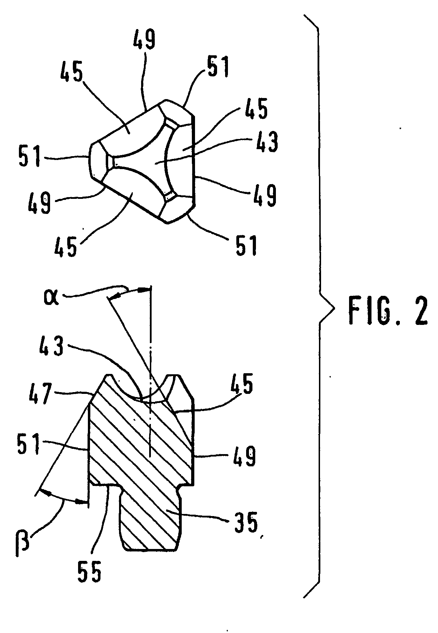

Es zeigen die Figur 1 eine Schnittdarstellung des erfindungsgemäßen Druckventils mit einem Federteller, der in der Figur 2 vergrößert in zwei Ansichten einzeln dargestellt ist und bei dem Ausnehmungen in der Kalottenfläche des Federtellers als schräge Anschliffe ausgebildet sind.

### Beschreibung des Ausführungsbeispiels

Das in der Figur 1 in einem Längsschnitt dargestellte, als Gleichdruckventil ausgebildete Druckventil 1 soll im Ausführungsbeispiel in eine Förderleitung 3 zwischen einem Pumpenarbeitsraum 5 einer nicht näher dargestellten Kraftstoffeinspritzpumpe und einer als Kraftstoffeinspritzventil 7 ausgebildeten Einspritzstelle in den Brennraum der zu versorgenden Brennkraftmaschine eingesetzt sein.

Das Druckventil 1 weist dabei ein Ventilgehäuse 9 auf, das eine gestufte Durchgangsbohrung 11 aufweist, die dabei einen Teil der Förderleitung 3 bildet. Das Druckventil 1 weist weiterhin einen rohrförmigen Ventilkörper 13 auf, der pumpenarbeitsraumseitig in die Durchgangsbohrung 11 des Ventilgehäuses 9 eingesetzt ist. Der Ventilkörper 13 weist dabei einen axialen Durchgangskanal 15 auf und bildet am Übergang zwischen seiner pumpenarbeitsraumabgewandten Ringstirnfläche zum Durchgangskanal 15 eine vorzugsweise konisch ausgebildete erste Ventilsitzfläche 17. Mit dieser ersten Ventilsitzfläche 17 wirkt ein kolbenförmiges, zum Teil im axialen Durchgangskanal 15 axial verschiebbar geführtes Druckventilschließglied 19 mit einer konischen Dichtfläche 21 zusammen. Das Druckventilschließglied 19 wird dabei von einer Ventilfeder 23 in Anlage am ersten Ventilsitz 17 gehalten und öffnet bei Überschreiten des Kraftstoffdruckes über die Schließkraft dieser Ventilfeder 23 in Richtung Einspritzstelle 7.

Das Druckventilschließglied 19 weist eine axiale Durchgangsbohrung 25 auf, die von einem in Richtung Pumpenarbeitsraum 5 öffnenden, als Kugelventil ausgebildeten Rückströmventil 27 verschließbar ist. Dabei bildet die dem Pumpenarbeitsraum 5 zugewandte Ringstirnfläche des Druckventilschließgliedes 19 eine zweite Ventilsitzfläche 29, mit der das als Kugel 31 ausgebildete bewegliche Ventilglied des Rückströmventils 27 zusammenwirkt. Die Ventilkugel 31 des Rückströmventils 27 wird dabei von einer Rückstellfeder 33 über einen Federteller 35 in Anlage am zweiten Ventilsitz 29 gehalten, wobei sich die Rückstellfeder 33 andererseits ortsfest gegenüber dem Ventilkörper 13 abstützt. Zur Begrenzung der Öffnungshubbewegung der Ventilkugel 31 beziehungsweise des Federtellers 35 ist ein Anschlagstück 37 in den Durchgangskanal 15 des Ventilkörpers 13 eingesetzt, wobei sich über die Einsetztiefe des Anschlagstückes 37 die maximale Öffnungshubbewegung der Ventilkugel 31 einstellen läßt. Dabei bildet eine der Ventilkugel 31 zugewandte Stirnfläche des Anschlagstückes 37 eine Anschlagbegrenzungsfläche, die mit einer zugewandten Stirnfläche des Federtellers 35 zusammenwirkt. Die Rückstellfeder 33 stützt sich an einem Ringabsatz 39 des Anschlagstückes 37 ab und umschließt dabei radial den die Anschlagfläche aufweisenden Teil des Anschlagstückes 37. Die das Druckventilschließglied 19 in Schließrichtung beaufschlagende Ventilfeder 23 stützt sich andererseits an einer Stützhülse 41 ab, die an einem Absatz der Durchgangsbohrung 11 anliegt und über deren axiale Erstreckung sich die Vorsprannkraft der Ventilfeder 23 einstellen läßt.

Der Aufbau des zwischen der Ventilkugel 31 und der Rückstellfeder 33 eingespannten Federtellers 35 soll nunmehr anhand der vergrößerten Teildarstellung der Figur 2 erfolgen. Dabei zeigt die Figur 2 in einem vergrößerten Ausschnitt aus der Figur 1 den Federteller 35 in zwei Ansichten. Der Federteller 35 ist dabei zylinderförmig ausgebildet und weist an seiner oberen, der Ventilkugel 31 zugewandten Stirnfläche eine die Ventilkugel 31 führende Kalottenfläche 43 auf, die in die obere Stirnfläche des Federtellers 35 konkav gewölbt eingeformt ist. Um dabei die Entstehung eines Staudruckpunktes an der Berührungslinie zwischen der Ventilkugel 31 und dem Federteller 35 sowie den Aufbau eines Staupolsters zwischen der Kalottenfläche 43 und der Ventilkugel 31 zu vermeiden, sind bei dem in der Figur 2 dargestellten Ausführungsbeispiel schräg angeordnete Flächenanschliffe 45 am Federteller 35 vorgesehen, die von der zylindrischen Umfangswandfläche ausgehend in die Kalottenfläche 43 einmünden. Dabei sind am Ausführungsbeispiel vorzugsweise drei gleichmäßig über den Umfang des zylinderförmigen Federtellers 35 verteilte schräge Flächenanschliffe 45 vorgesehen. Der Winkel α der schrägen Flächenanschliffe 45 zur Längsachse des Federtellers 35 beträgt dabei im Ausführungsbeispiel 30°. Für ein besseres Überströmverhalten des an der Ventilkugel 31 vorbeiströmenden Kraftstoffes ist zudem am Übergang zwischen der radialen Umfangswandfläche des Federtellers 35 zu einer, der Ventilkugel 31 zugewandten und die Kalottenfläche 43 umgebenden axialen Ringstirnfläche eine radial umlaufende Anschrägung 47 am Federteller 35 vorgesehen. Diese Anschrägung weist dabei einen Winkel β zur Längsachse des Federteller 35 auf, der ebenfalls 30° beträgt. Um einen ungedrosselten Kraftstoffübertritt entlang der axialen Erstreckung des Federtellers 35 zu gewährleisten weist dieser weiterhin axial verlaufende Flächenanschliffe 49 auf, wobei vorzugsweise drei gleichmäßig über den Umfang verteilte Flächenanschliffe 49 am Federteller 35 vorgesehen sind. Die axiale Führung des Federtellers 35 erfolgt dabei über die verbleibenden Zylinderwandstegbereiche 51, mit denen der Federteller 35 axial gleitverschiebbar in dem Durchgangskanal 15 des Ventilkörpers 13 geführt ist. Für eine sichere Anlage der Rückstellfeder 33 ist zudem eine Ringstirnfläche 55 am Federteller 35 vorgesehen, die der die Ventilkugel 31 führenden Kalottenfläche 43 abgewandt ist und die radial einwärts von einem axial vorstehenden Zapfenteil begrenzt ist.

Das erfindungsgemäße Druckventil arbeitet in folgender Weise. Vor Beginn der Hochdruckförderung der Kraftstoffeinspritzpumpe herrscht in der Förderleitung 3 ein Standdruck, bei dem das in Richtung Einspritzstelle 7 öffnende Ventil und das in Gegenrichtung öffnende Rückströmventil 27 durch die Kraft der Ventilfeder 23 und der Rückstellfeder 33 verschlossen gehalten werden. Dabei ist die Vorspannkraft der Ventilfeder 23 größer ausgebildet als die Vorspannkraft der Rückstellfeder 33. Mit Beginn der Hochdruckförderung an der Kraftstoffeinspritzpumpe steigt der Druck im Pumpenarbeitsraum 5 über den Öffnungsdruck des in Richtung Einspritzstelle 7 öffnenden Ventils, so daß der am ersten Ventilsitz 17 im Durchgangskanal 15 des Ventilkörpers 13 anstehende Kraftstoffhochdruck das Druckventilschließglied 19 entgegen der Rückstellkraft der Ventilfeder 23 vom ersten Ventilsitz 17 abhebt. Dabei durchströmt der unter hohem Druck stehende Kraftstoff zunächst das Anschlagstück 37 entlang dessen Ausnehmungen, strömt weiter entlang der axialen Flächenanschliffe 49 des Federtellers 35 und des Druckventilschließgliedes 19 in einen die Ventilfeder 23 aufnehmenden Federraum und von dort über die Hülse 41 und die gestufte Durchgangsbohrung 11 weiter in die Förderleitung 3 zum in den Brennraum ragenden Kraftstoffeinspritzventil 7 und gelangt dort zur Einspritzung.

Nach Beendigung der Hochdruckförderung im Pumpenarbeitsraum 5 sinkt der Druck in der Förderleitung 3 sehr rasch wieder unter den notwendigen Öffnungsdruck des in Richtung Kraftstoffeinspritzventil 7 öffnenden Druckventils, so daß die Ventilfeder 23 das Druckventilschließglied 19 erneut in Anlage an den ersten Ventilsitz 17 zurückbewegt. Die durch das Verschließen des Einspritzventils 7 und des Druckventilglieds 19 in der Förderleitung 3 entstehende Kraftstoffdruckwelle entspannt sich dabei über das Rückströmventil 27, wozu der in der Durchgangsbohrung 25 im Druckventilschließglied 19 anstehende Kraftstoffdruck die Ventilkugel 31 entgegen der Rückstellkraft der Rückstellfeder 33 vom zweiten Ventilsitz 29 abhebt. Dabei strömt nunmehr der Kraftstoff aus der Förderleitung 3 über die gestufte Durchgangsbohrung 11, und die Durchgangsbohrung 25 im Druckventilschließglied 19 in den Durchgangskanal 15 im Ventilkörper 13 zurück in den Pumpenarbeitsraum 9.

Dabei wird durch die Ausnehmungen in der die Ventilkugel 31 führenden Kalottenfläche 43 des Federtellers 35 gewährleistet, daß die Ventilkugel 31 in Anlage am Federteller 35 verbleibt und dessen Öffnungshubbewegung mit vollzieht. Dabei strömt der zwischen der Ventilkugel 31 und der Kalottenfläche 43 des Federtellers 35 befindliche Kraftstoff über die schrägen Flächenanschliffe 45 in den Durchgangskanal 15, in dem ein niedrigerer Kraftstoffdruck herrscht. Die Bildung eines Staudruckpunktes des an der Ventilkugel 31 überströmenden Kraftstoffes beim Auftreffen auf den Federteller 35 wird durch die Anschrägung 47 an dessen Stirnfläche vermieden. Dabei ermöglicht die sichere Anlage der Ventilkugel 31 am Federteller 35 einen gleichmäßigen Kraftstoffströmungsübertritt am Rückströmventil 27. Durch die Verhinderung des Abhebens der Ventilkugel 31 vom Federteller 35 wird dabei zum einen ein konstanter Öffnungsquerschnitt am Rückströmventil 27 gewährleistet und zum anderen die Beanspruchung der Rückstellfeder 33 verringert, da der Federteller 35 kein übermäßig großen Hub ausführt. Zudem kann der mechanische Verschleiß der Ventilkugel 31 und des Federtellers 35 im Bereich der Kalottenfläche 43 verringert werden, da ein ständiges Aufschlagen der Ventilkugel 31 am Federteller 35 unterbunden werden kann.

Nach Erreichen eines einstellbaren Standdruckes in der Förderleitung 3 übersteigt die Kraft der Rückstellfeder 33 erneut den verbleibenden Kraftstoffdruck in der Förderleitung 3 und drückt so die Ventilkugel 31 erneut in eine dichtende Anlage an den zweiten Ventilsitz 29. Die Öffnungshubbewegung der Ventilkugel 31 ist dabei durch die Anlage des Federtellers 35 am Anschlagstück 37 begrenzt.

Es ist somit mit dem erfindungsgemäßen Druckventil möglich, den Verschleiß an der Ventilkugel 31, dem Federteller 35 und der Rückstellfeder 33 des Rückströmventils 27 zu verringern und so die Lebensdauer und Zuverlässigkeit des gesamten Druckventiles zu erhöhen.

## Patentansprüche

1. Druckventil, vorzugsweise zum Einbau in eine Förderleitung (3) zwischen einer Kraftstoffeinspritzpumpe und einer Einspritzstelle (7) an der zu versorgenden Brennkraftmaschine, mit wenigstens einem als Ventilkugel (31) ausgebildeten beweglichen Ventilglied, das durch eine Rückstellfeder (33) in Anlage an eine Ventilsitzfläche (29) bringbar ist, wobei zwischen der Rückstellfeder (33) und der Ventilkugel (31) ein Federteller (35) vorgesehen ist, der eine die Ventilkugel (31) führende Kalottenfläche (43) und eine dieser Kalottenführungsfläche (43) abgewandte Auflagefläche (55) für die Rückstellfeder (33) aufweist, wobei die die Ventilkugel (31) führende Kalottenfläche (43) am Federteller (35) durch Ausnehmungen unterbrochen ist, **dadurch gekennzeichnet, dass** die Ausnehmungen am Umfang der Kalottenfläche (43) als schräg angeordnete Flächenanschliffe (45) ausgebildet sind und dass sich an die schräg angeordneten Flächenanschliffe (45) der Kalottenfläche (43) abgewandt axiale Flächenanschliffe (49) an der zylindrischen Umfangswandfläche des Federtellers (35) anschließen.

2. Druckventil nach Anspruch 1, **dadurch gekennzeichnet, daß** der zylinderförmige Federteller (35) am Übergang zwischen seiner radialen Umfangswandfläche zu einer, der Ventilkugel (31) zugewandten, die Kalottenfläche (43) umgebenden axialen Ringstirnfläche eine Anschrägung (47) aufweist.

3. Druckventil nach Anspruch 2, **dadurch gekennzeichnet, daß** die Anschrägung (47) einen Winkel zur Längsachse des Federteller (35) von 30° bis 45° aufweist.

4. Druckventil nach Anspruch 2, **dadurch gekennzeichnet, daß** der Flächenanschliff (45) an der Kalottenfläche (43) und die Anschrägung (47) an der Stirnfläche des Federtellers (35) den gleichen Neigungswinkel, vorzugsweise 30°, zur Längsachse des Federtellers (35) aufweisen.

5. Druckventil nach Anspruch 1, **dadurch gekennzeichnet, daß** die Auflagefläche der Rückstellfeder (33) am Federteller (35) als Ringstirnfläche (55) ausgebildet ist.

## Claims

1. Pressure valve, preferably for installation in a delivery line (3) between a fuel injection pump and an injection point (7) on the internal combustion engine to be supplied, having at least one movable valve member which is configured as a valve ball (31) and can be brought into contact with a valve seat surface (29) by a restoring spring (33), a spring collar (35) being provided between the restoring spring (33) and the valve ball (31), which spring collar (35) has a spherical cap area (43), which guides the valve ball (31), and a bearing surface (55), facing away from the said spherical cap guide area (43), for the restoring spring (33), the spherical cap area (43) which guides the valve ball (31) being interrupted on the spring collar (35) by recesses, **characterized in that** the recesses are formed on the circumference of the spherical cap area (43) as obliquely arranged ground surface sections (45), and **in that** axial ground surface sections (49) adjoin the obliquely arranged ground surface sections (45) on the cylindrical circumferential wall surface of the spring collar (35) so as to face away from the spherical cap area (43).

2. Pressure valve according to Claim 1, **characterized in that** the cylindrical spring collar (35) has a chamfer (47) at the transition between its radial circumferential wall surface and an axial annular side surface which faces the valve ball (31) and surrounds the spherical cap area (43).

3. Pressure valve according to Claim 2, **characterized in that** the chamfer (47) has an angle of from 30° to 45° with respect to the longitudinal axis of the spring collar (35).

4. Pressure valve according to Claim 2, **characterized in that** the ground surface section (45) at the spherical cap area (43) and the chamfer (47) at the end surface of the spring collar (35) are at the same angle of inclination, preferably 30°, with respect to the longitudinal axis of the spring collar (35).

5. Pressure valve according to Claim 1, **characterized in that** the bearing surface of the restoring spring (33) on the spring collar (35) is configured as an annular end surface (55).

## Revendications

1. Soupape de pression de préférence pour montage dans une conduite de refoulement (3) reliant une pompe d'injection de carburant et un point d'injection (7) se trouvant sur le moteur à combustion interne à alimenter, comportant au moins un organe de soupape mobile sous la forme d'une bille de soupape (31) qui peut être appliquée par un ressort de rappel (33) sur une portée de siège de soupape (29), avec entre le ressort (33) et la bille de soupape (31) une coupelle de ressort (35) qui présente une portée en forme de calotte (43) guidant la bille de soupape (31) et à l'opposé de cette portée (43) une portée d'appui (55) pour le ressort de rappel (33), la portée en forme de calotte (43) guidant la bille de soupape (31) étant interrompue par des évidements sur la coupelle de ressort (35),
**caractérisée en ce que**
les évidements sur la périphérie de la portée en forme de calotte (43) sont constitués par des entailles (45) obliques auxquelles se raccordent des surfaces de coupe (49) pratiquées axialement sur la surface périphérique cylindrique de la coupelle de ressort (35), à l'opposé de la portée en forme de calotte (43).

2. Soupape de pression selon la revendication 1,
**caractérisée en ce que**
la coupelle de ressort (35) en forme de cylindre présente une partie en pente (47), à la transition entre sa surface périphérique radiale et une face frontale annulaire axiale tournée vers la bille de soupape (41) et qui entoure la portée en forme de calotte (43).

3. Soupape de pression selon la revendication 2,
**caractérisée en ce que**
la partie en pente (47) fait un angle de 30° à 45° avec l'axe longitudinal de la coupelle de ressort (35).

4. Soupape de pression selon la revendication 2,
**caractérisée en ce que**
l'entaille (45) sur la portée en forme de calotte (43) et la partie en pente (47) sur la face frontale de la coupelle de ressort (35) présentent le même angle d'inclinaison, de préférence 30°, avec l'axe longitudinal de la coupelle de ressort (35).

5. Soupape de pression selon la revendication 1,
**caractérisée en ce que**
la portée d'appui du ressort de rappel (33) sur la coupelle de ressort (35) est une portée annulaire (55).
